# EUROPEAN PATENT APPLICATION

(11) **EP 4 782 324 A1**
(43) Date of publication of application: **29.07.2026**
(21) Application number: 25153846.8
(22) Date of filing: 24.01.2025
(51) Int. Cl.: B63H 5/10, B63H 5/125, B63H 21/17, B63H 23/24, H02K 7/08, H02K 16/02

(54) **NON-DRIVE END SHAFT CONSTRUCTION IN CRP APPLICATION**

(71) Applicant: ABB Oy, 00380 Helsinki (FI)
(72) Inventor: KEKKI, Tuomas, 00980 Helsinki (FI); PELLINEN, Petri, 00980 Helsinki (FI); SAKKINEN, Petri, 00980 Helsinki (FI)
(74) Representative: Zimmermann & Partner Patentanwälte mbB

(57) **Abstract**

The invention relates to a design of a plurality of shafts of a non-drive end of an azimuthing propulsion unit with a plurality of propellers. The design is at least partially based on a slit design of a least some of the shafts on the on the non-drive end of the azimuthing propulsion unit. The design enables the mounting of the shafts in combination with other parts such as bearing, slip rings or an electric motor of the azimuthing propulsion unit.

## Description

### TECHNICAL FIELD

Embodiments of the present disclosure relate to an azimuthing propulsion unit. Further embodiments relate to a shaft design of the non-driving end of the azimuthing propulsion unit. Furthermore, the disclosure relates to methods for the assembly of the shafts of the non-driving end of the azimuthing propulsion unit.

### BACKGROUND

Azimuthing propulsion units provide an efficient way to propel marine vessels. Further, azimuthing propulsion units allow for an improved maneuverability of marine vessels. In azimuthing propulsion units, at least one marine propeller attached to a rotatable pod provides thrust. A direction of the thrust may be controlled via a rotation of the rotatable pod. In typical azimuthing propulsion units, at least one electric motor driving the at least one marine propeller is integrated in the pod.

Azimuthing propulsion units that provide a high efficiency, durability and maintainability, in particular in view of the restricted amount of space available in the pod, are desired. In some embodiments azimuthing propulsion units are based on the principle of contra-rotating propellers (CRP). This principle enables a high level of efficiency of the propulsion. To realize this principle more than one shaft is required inside the azimuthing propulsion unit to drive the multiple propellers.

The layout and the construction of the shafts within the azimuthing propulsion unit needs to fulfill several requirements. In some embodiments the shafts may at least partially run inside of each other. In some embodiments the shafts need to be supported by bearing units requiring a certain contact layout. In some embodiments components must be mounted onto the shafts, for instance to ensure the power supply or seal at least parts of the unit.

### DISCLOSURE OF THE INVENTION

In the view of the foregoing, the present disclosure is directed to an azimuthing propulsion unit and a method for construction and assembly of a plurality of shafts of a non-driving end of the of an azimuthing propulsion unit.

According to an aspect of the present disclosure, an azimuthing propulsion unit comprising a dual rotor electric motor, the dual rotor electric motor comprising an outer rotor and an inner rotor arranged coaxially within the outer rotor, the azimuthing propulsion unit further comprising a rotatable inner shaft coupled to the inner rotor, and a rotatable outer shaft coupled to the outer rotor, wherein the inner shaft runs at least partially within the outer shaft, and wherein the inner shaft comprises a distal inner segment and a proximal inner segment is provided.

According to another aspect of the present disclosure, a method for mounting an azimuthing propulsion unit, comprising providing an outer shaft with a hollow cross section, and providing an inner shaft, wherein the inner shaft comprises a distal inner segment and a proximal inner segment, wherein the method further comprises inserting at least one of or both of the distal inner segment and the proximal inner segment into the outer shaft, and coupling the distal inner segment to the proximal inner segment is provided.

According to some embodiments, the azimuthing propulsion unit is configured to propel a marine vessel. In particular, the marine vessel may comprise at least one azimuthing propulsion unit according to embodiments described herein. The marine vessel as described herein comprises seagoing or inland marine vessels. In particular, the marine vessel comprises ships and boats. In some embodiments, the marine vessel comprises merchant ships, in particular for transporting goods. In particular, the marine vessel may comprise a container vessel, a Ro-Ro or car carrier, a tanker or shuttle tanker, a liquid natural gas (LNG) carrier or a floating storage and regasification unit. In some embodiments, the marine vessel comprises ferries, in particular single- and double-ended ferries, cruise ships, water buses, yachts. In some embodiments, the marine vessel comprises offshore energy vessels, in particular service operation vessels (SOVs), cable laying vessels (CLVs), foundation installation vessels (FIVs), offshore construction (OCVs) and support vessels (OSVs), platform supply vessels (PSVs), and anchor-handling tug supply vessels (AHTS). In some embodiments, the marine vessel comprises research and survey vessels or other special purpose vessels, such as dredgers, heavy lift vessels or towboats. In some embodiments, the marine vessel comprises ice-going marine vessels, in particular icebreakers. In some embodiments, the marine vessel may comprise navy or coast guard vessels.

The marine vessel typically comprises a hull. The pod of the azimuthing propulsion unit is attached to the hull of the marine vessel, in particular at the bottom of the hull. Typically, the hull defines a vessel interior and a vessel exterior. Space confined by the hull and configured to be isolated from sea water may be defined as the vessel interior. Space outside the hull, and in particular the sea, may be defined as the vessel exterior. Typically, the vessel interior is substantially free of sea water and substantially dry.

In some embodiments, the marine vessel may comprise a plurality of azimuthing propulsion units. In particular, the marine vessel may comprise 2, 3, 4, or more azimuthing propulsion units. Typically, each of the plurality of azimuthing propulsion units may be controlled separately. In some embodiments, the marine vessel may comprise a single azimuthing propulsion unit with a single pod. In some embodiments, at least one azimuthing propulsion unit may be combined with one or more further marine propulsion unit on a single marine vessel.

Typically, the azimuthing propulsion unit comprises a pod with a pod hull. The pod is configured to be rotatably attached to the hull of the marine vessel, particularly at the bottom of the hull of the marine vessel. The pod may be rotated about a substantially vertical rotation axis of the azimuthing propulsion unit. In particular, the pod may be rotated by at least 270°, at least 315° or at least 360° about the substantially vertical rotation axis of the azimuthing propulsion unit. In typical embodiments, the rotation of the pod about the substantially vertical rotation axis of the azimuthing propulsion unit is not restricted, in particular not mechanically restricted.

Typically, the pod comprises a hull cap at a first end of the pod and a propeller unit, in particular a pushing or pulling propeller unit, attached to a second end of the pod. The first end of the pod may also be described as non-driving end, NDE, and the second end of the pod may also be described as driving end, DE, of the pod. The propeller unit typically rotates about a rotation axis of the propeller unit. The rotation axis of the propeller unit may be substantially perpendicular to the vertical rotation axis of the azimuthing propulsion unit.

In typical embodiments, the propeller unit comprises an outer shaft propeller and an inner shaft propeller. Typically, the outer shaft propeller is arranged closer to the pod hull than the inner shaft propeller. In a pushing propeller unit, the outer shaft propeller may also be described as front propeller and the inner shaft propeller may be described as the rear propeller; and vice versa for a pulling propeller unit. In particular, the outer shaft propeller is arranged closer to the vertical rotation axis than the inner shaft propeller. Typically, the outer shaft propeller and the inner shaft propeller are arranged adjacent to each other. The outer shaft propeller and the inner shaft propeller rotate about the rotation axis of the propeller unit.

Typically, the propeller unit comprises a contra rotating propeller unit. In particular, the outer shaft propeller may be configured to rotate in a first direction, particularly about the rotation axis of the propeller unit, and the inner shaft propeller may be configured to rotate in a second direction opposite to the first direction, particularly about the rotation axis of the propeller unit. In other words, the outer shaft propeller may rotate clockwise and the inner shaft propeller may rotate counterclockwise, or vice versa, about the same rotation axis. A contra rotating propeller unit may advantageously allow for a higher hydrodynamic efficiency than other propeller concepts, in particular with respect to single propellers.

In some embodiments, the outer shaft propeller has a first diameter and the inner shaft propeller has a second diameter with the second diameter being different from the first diameter, particularly the first diameter being larger than the second diameter. Typically, the outer shaft propeller comprises a first number of first blades and the inner shaft propeller comprises a second number of second blades. Typically, the second number may be different from the first number. The outer shaft propeller may comprise 3, 4, 5, 6, 7 or 8 first blades. The inner shaft propeller may comprise 3, 4, 5, 6, 7 or 8 second blades. In some embodiments, the outer shaft propeller comprises one more first blade than the inner shaft propeller comprises second blades. Exemplarily, the outer shaft propeller comprises 6 first blades and the inner shaft propeller comprises 5 second blades. In some embodiments, the outer shaft propeller and the inner shaft propeller may comprise the same number of blades, in particular 3, 4, 5, 6, 7 or 8 first and second blades, respectively. The outer shaft propeller and/or the inner shaft propeller may each be manufactured as a monoblock or in components, as a built-up propeller.

Typically, the propeller unit is driven by an electric motor. Typically, the electric motor has a power of at least 100 kW, at least 1 MW, at least 2 MW, at least 5 MW, at least 10 MW or at least 15 MW. The electric motor is typically arranged within the pod. Particularly, the electric motor is mechanically connected to the propeller gearlessly. Typically, a rotation axis of the electric motor is identical to a rotation axis of the propeller unit. In particular, an output shaft of the electric motor may be identical to the drive shaft of the propeller unit or may be gearlessly connected to a drive shaft of the propeller unit. The output shaft of the electric motor typically is coaxial to the drive shaft of the propeller unit. In typical embodiments, for a propeller unit comprising an outer shaft propeller and an inner shaft propeller, in particular for the contra rotating propeller unit, the outer shaft propeller and the inner shaft propeller may be driven by the same dual rotor electric motor.

The electric motor typically comprises a contra rotating electric motor. In particular, the contra rotating electric motor comprises a dual rotor electric motor with an outer rotor and an inner rotor configured to rotate in opposite directions about a rotation axis of the electric motor. Typically, the rotation axis of the electric motor may be coaxially with the rotation axis of the propeller unit. Typically, the electric motor is a synchronous electric motor. Typically, the outer rotor comprises windings to be supplied with an electric current for the operation of the electric motor. The inner rotor may be a permanent magnet rotor or an externally excited synchronous rotor.

In some embodiments, the drive shaft of the propeller comprises an outer shaft and an inner shaft. Outer shaft and inner shaft are typically coaxially arranged. Typically, the outer rotor drives the outer shaft. The outer shaft is typically mechanically connected to the outer shaft propeller gearlessly. Typically, the inner rotor drives the inner shaft. The inner shaft is typically mechanically connected to the inner shaft propeller gearlessly. Typically, the inner shaft is arranged inside the outer shaft; in other words, an inside radius of the outer shaft exceeds an outside radius of the inner shaft. The inner shaft and the outer shaft rotate about the same rotation axis, and in particular about the rotation axis of the electric motor. Typically, the inner shaft is supported in the pod by a drive end, DE, inner bearing and a non-drive end, NDE, inner bearing. Typically, the outer shaft is supported in the pod by a drive end, DE, outer bearing and a non-drive end, NDE, outer bearing. The NDE inner bearing and/or the NDE outer bearing may each comprise an axial bearing and a radial bearing, particularly within the same bearing housing. Employing a contra rotating electric motor may advantageously allow to drive the contra rotating propeller with a single electric motor gearlessly. Thereby, a more compact and efficient drive train may be provided.

In some embodiments, the azimuthing propulsion unit comprises an NDE outer shaft and an NDE inner shaft. The NDE outer shaft and NDE inner shaft are both located on the NDE, typically within the pod. The NDE outer shaft and NDE inner shaft are located on the opposite side of the electric motor as the propeller or the propellers of the azimuthing propulsion unit.

In typical embodiments, the NDE outer shaft and NDE inner shaft both rotate along the same rotation axis. Typically, the rotation axis is the rotation axis of the electric motor.

Typically, the NDE inner shaft runs at least partially within the NDE outer shaft. In some embodiments, the NDE inner shaft is longer than the NDE outer shaft or runs within the whole elongation of the NDE outer shaft. Typically, the NDE inner shaft runs within the whole elongation of the NDE outer shaft and comprises sections of shaft to both sides, regarding the direction of the rotation axis, of the NDE outer shaft. Typically, the NDE inner shaft runs within the whole elongation of the NDE outer shaft and comprises a section of shaft to one side, regarding the direction of the rotation axis, of the NDE outer shaft.

In typical embodiments, the NDE inner shaft is longer regarding the elongation in direction of the rotation axis than the NDE outer shaft. Typically, the length of NDE inner shaft is 1.1, 1.2, 1.3, 1.5 or 2.0 times longer than the NDE outer shaft. In typical embodiments, the length of NDE inner shaft is 1.45 times longer than the NDE outer shaft. Typically, the NDE inner shaft and NDE outer shaft are exactly or nearly the same length. In typical embodiments, the NDE outer shaft is longer regarding the elongation in direction of the rotation axis than the NDE inner shaft.

In typical embodiments, the NDE outer shaft comprises a hollow cross section in at least one elongated section of the NDE outer shaft. Typically, the NDE outer shaft comprises a hollow cross section regarding its whole elongation. The elongation of NDE inner shaft and the NDE outer shaft are considered in the orientation of the rotation axis.

In typical embodiments, the NDE inner shaft is coupled to the inner rotor of the electric motor. In typical embodiments, the NDE inner shaft is coupled to the inner rotor by an inner rotor connection. The inner rotor connection may be an inner rotor screw connection. The inner rotor screw connection may comprise a plurality of screws, fasteners or bolts, wherein the screws, fasteners or bolts may be of identical dimensions and type or may differentiate from each other. Typically, the inner rotor screw connection comprises a plurality of screws, fasteners or bolts. The screws, fasteners or bolts of the inner rotor screw connection are typically arranged along the circumference of the inner rotor. The screws, fasteners or bolts of the inner rotor screw connection are typically arranged on a bolt circle of the inner rotor screw connection. The screws, fasteners or bolts of the inner rotor screw connection may be arranged on more than one bolt circle.

In some embodiments, the NDE inner shaft or at least a section, especially the proximal inner segment of the NDE inner shaft is an integral part of the inner rotor. In exemplary embodiments, the proximal inner segment of the NDE inner shaft might be the proximal flange, which might form the NDE side cap of the inner rotor.

In typical embodiments, the NDE outer shaft is coupled to the outer rotor of the electric motor. In typical embodiments the NDE outer shaft is coupled to the outer rotor by an outer rotor connection. The outer rotor connection may be an outer rotor screw connection. The outer rotor screw connection may comprise a plurality of screws, fasteners or bolts, wherein the screws, fasteners or bolts may be of identical dimensions and type or may differentiate from each other. Typically, the outer rotor screw connection comprises a plurality of screws, fasteners or bolts. The screws, fasteners or bolts of the outer rotor screw connection are typically arranged along the circumference of the outer rotor. The screws, fasteners or bolts of the outer rotor screw connection are typically arranged on a bolt circle of the outer rotor screw connection. The screws, fasteners or bolts of the outer rotor screw connection may be arranged on more than one bolt circle.

In some embodiments, the NDE outer shaft or at least a section, especially the proximal outer segment of the NDE outer shaft is an integral part of the outer rotor. In exemplary embodiments, the proximal outer segment of the NDE outer shaft might be the proximal flange, which might form the NDE side cap of the outer rotor.

Typically, the threads of the inner rotor screw connection and the outer rotor screw connection are manufactured into the respective rotor and the through bores of the screw connections are part of the respective shaft or the flange of the respective shaft. In some embodiments, the threads of the inner rotor screw connection and the outer rotor screw connection are manufactured into the respective shaft and the through bores of the screw connections are part of the respective rotor.

The outer rotor connection and the inner rotor connection may be realized using other types of connections. The outer rotor connection and the inner rotor connection may be of the same type of connection or may be of different types of connection. Typical types of connections for the outer rotor connection and the inner rotor connection include rivet connections, any type of welded connections, adhesive connections, soldered connections, shrink-fit connections, tapered joint connections, bolt connections or any combination of connection types.

In typical embodiments, the proximal inner segment of the NDE inner shaft is elongated and runs through the inner rotor and comprises a section of the NDE inner shaft on the drive end side. Typically, the section of NDE inner shaft on the drive end side is coupled to the inner shaft propeller. In some embodiments, the inner rotor is coupled to the section of NDE inner shaft on the drive end side. Typically, the inner rotor or the inner shaft propeller are coupled to the section of NDE inner shaft on the drive end side by means of a shrink fit or a tapered joint.

The outer rotor connection and the inner rotor connection may be centered by a centering collar. The centering collar may be located on the respective rotor or the respective shaft. The centering enables the respective rotor and the respective shaft to align to the rotation axis of each other and therefore reduces potential unbalances.

In typical embodiments, the NDE inner shaft or the NDE outer shaft comprises a plurality of segments. Typical embodiments of the NDE inner shaft is composed of 2 or 3 segments. Typically, the NDE inner shaft comprises or is composed of a distal inner segment and a proximal inner segment. Typical embodiments of the NDE outer shaft is composed of 2 or 3 segments. Typically, the NDE outer shaft comprises or is composed of a distal outer segment and a proximal outer segment. Typically, the segments being arranged next to each other regarding the direction of the rotation axis. Typically, the segments of the respective shaft are coupled together to form the respective shaft.

Within this document the terms of location are related to the center of the azimuthing propulsion unit. In typical embodiments the electric motor of the azimuthing propulsion unit is located closer to the center of the azimuthing propulsion unit than the NDE inner shaft and the NDE outer shaft. Therefore, in the case of the NDE inner shaft and the NDE outer shaft the terms distal and proximal may be understood related to the location of the electric motor.

Typically, the distal inner segment, the distal outer segment, the proximal inner segment or the proximal outer segment are monolithic. In some embodiments, at least some of the distal inner segment, the distal outer segment, the proximal inner segment or the proximal outer segment are monolithic and comprise one or more parts being mounted thereto. Typical parts include flanges, washers, retaining rings, lock or shaft nuts, sleeves, distance rings, liners, or bearing rings.

In typical embodiments, at least one of the NDE inner shaft and the NDE outer shaft comprises a dismountable flange. The dismountable flange forms one of the segments of the respective shaft. In some embodiments, the dismountable flange forms the proximal inner segment or the distal inner segment. In some embodiments, the dismountable flange forms the proximal outer segment or the distal outer segment. Typically, the dismountable flange is located to one end of the respective shaft regarding the elongation of the respective shaft.

Due to the possibility to dismount the dismountable flange from the respective shaft, mounting of components onto the outer surface of the respective shaft may be enabled. In some embodiments, this enables the mounting of an integral component, which otherwise could only be mounted if the component is of a split design.

Typically, the distal outer segment and the proximal outer segment are coupled with an outer shaft connection. The distal inner segment and the proximal inner segment are coupled with an inner shaft connection in typical embodiments.

In some embodiments, the outer shaft connection is an outer shaft screw connection. Typically, the inner shaft connection is an inner shaft screw connection. In typical embodiments, shaft segments can be disassembled in a non-destructive way. Especially during maintenance this enables the at least partial disassembly of the respective shaft even in constraint spatial conditions.

Typically, the inner shaft screw connection comprises a plurality of screws, fasteners or bolts. Typically, the outer shaft screw connection comprises a plurality of screws, fasteners or bolts. In some embodiments, the screws, fasteners or bolts of one respective connection are of the same type. In some embodiments, the screws, fasteners or bolts of one respective connection are of more than one type.

In typical embodiments, the threads of the inner shaft screw connection or the outer shaft screw connection are manufactured within the proximal inner segment or the proximal outer segment respectively. The through bores of the respective screw, fastener or bolt connection are within the distal inner segment or the distal outer segment respectively. With other words, the screws, fasteners or bolts are run through the respective bore within the respective distal segment, before the screws, fasteners or bolts are screwed into the respective threads of the respective proximal segment.

In some embodiments, the outer shaft connection or the inner shaft connection are realized using other types of connections. The outer shaft connection and the inner shaft connection may be of the same connection type or may be of different connection types. Typical types of connections for the outer shaft connection and the inner shaft connection include rivet connections, any type of welded connections, adhesive connections, soldered connections, shrink-fit connections, tapered joint connections, bolt connections or any combination of connection types.

The outer shaft connection and the inner shaft connection may be centered by a centering collar. The centering collar may be located on each of the respective segments of the respective connection. The centering enables the respective segments to align to the rotation axis of each other and therefore reduces potential unbalances.

In typical embodiments, the NDE inner shaft and the NDE outer shaft are manufactured out of the same material. Typically, the NDE inner shaft and the NDE outer shaft are manufactured out of the different materials. Typically, all respective segments of a respective shaft are manufactured out of the same material. The segments of a respective shaft may be manufactured out of different materials. Typical materials include ferrous materials, aluminum alloys, composite materials like fiberglass-reinforced materials or carbon fiber-reinforced materials. Typically, the shafts are manufactured by steel casting or forging. At least parts of the manufacturing may include machining. The shafts or at least parts or segments of the shafts may be manufactured by additive manufacturing.

In typical embodiments, the NDE inner shaft comprises a proximal inner flange. Typically, the proximal inner flange is part of the proximal inner segment. In typical embodiments, the NDE inner shaft comprises a distal inner flange. Typically, the distal inner flange is part of the distal inner segment.

Typically, the proximal inner flange is located on the proximal end of the proximal inner segment. In some embodiments, the proximal inner segment comprises a section proximal to the proximal inner flange. In some embodiments, the NDE inner shaft comprises more than two flanges.

Typically, a flange of a shaft is characterized by a difference in diameter compared to the surrounding section of shaft. In typical embodiments, a flange comprises a wider diameter compared to the adjoining section of shaft. Typically, a flange is located on the end of a shaft regarding the rotation axis. A flange can be advantageous because due to the change in diameter it is possible to arrange more than one connection on one shaft, wherein a potential spatial interference of the connections is reduced or prevented.

Within this document a flange is typically defined regarding the design of the whole shaft in its mounted stage. A flange might exemplarily be formed by one of the segments of the respective shaft having a wider diameter than one or two of the segments of this shaft with a smaller diameter and neighboring the segment with the wider diameter. The surrounding section of a respective flange, defining the flange due to a difference in diameter can be located on another segment or part of the shaft than the flange itself. In other words, a segment of a shaft without change of diameter itself may form a flange of the shaft it is part of, if the surrounding sections of shaft or the adjoining section of shaft comprises a different diameter. In typical embodiments, a flange is formed by an outer segment of a shaft, which is located to one end of the shaft, wherein the segment comprises a constant outer diameter, wherein the constant outer diameter is wider than the outer diameter of the section of shaft next to the outer segment of the shaft. This description of a flange typically refers to both shafts, the NDE inner shaft and the NDE outer shaft, and their segments, respectively.

In some embodiments, a flange of a shaft may be formed by a part of the shaft, wherein the part of the shaft and the rest of the shaft comprise a contact in radial direction of the shaft. In other word, a part of a shaft forming a flange and the rest of the shaft overlap regarding the elongation of the shaft at least partially, wherein the cross section of the part of the shaft forming the flange surrounds the cross section of the rest of shaft.

In typical embodiments, the NDE outer shaft comprises a proximal outer flange. Typically, the proximal outer flange is part of the proximal outer segment. In typical embodiments, the NDE outer shaft comprises a distal outer flange. Typically, the distal outer flange is part of the distal outer segment.

Typically, the proximal outer flange is located on the proximal end of the proximal outer segment. In some embodiments, the proximal outer segment comprises a section proximal to the proximal outer flange. In some embodiments, the NDE outer shaft comprises more than two flanges.

Typically, the outer rotor connection is realized at the proximal outer flange. Typically, the inner rotor connection is realized at the proximal inner flange.

In typical embodiments, the respective rotor connection of the NDE inner shaft or the NDE outer shaft is located on a wider diameter around the rotation axis than the respective shaft connection. Typically, the diameter of the rotor connection is approximately 1.5, 2.0, 3.0, 4.0 or 5.0 times wider than the diameter of the respective shaft connection. Typical embodiments enable sufficient access and space for the mounting and dismounting of the fasteners of the respective connection.

Typically, the NDE inner shaft or the NDE outer shaft is in a first step of manufacturing at least partially manufactured as an integral shaft. In a second step of manufacturing the shaft is then dived up into segments. In typical embodiments, a manufacturing sequence of the NDE inner shaft or the NDE outer shaft might be preformed as follows: in a first task, distal and proximal segments might be manufactured separately. Thereby, a connection interface area is manufactured precisely to final dimensions. Then, the connection between distal and proximal segments might be fastened, typically with bolts. Final machining is done with shafts connected together, e.g. to get tolerances precise). Afterwards, parts are again detached and pod building can be started. Typical processes as described herein enable, that the required manufacturing tolerances of the respective distal and proximal flange of the respective shaft are achieved.

In typical embodiments, the NDE inner shaft comprises a hollow cross section in at least one elongated section of the NDE inner shaft. Typically, the NDE inner shaft comprises a hollow cross section regarding its whole elongation. The hollow cross section of the NDE inner shaft may comprise one inner diameter. The hollow cross section of the NDE inner shaft may comprise more than one inner diameter.

The hollow cross section of the NDE inner shaft enables the installation of components inside of the NDE inner shaft. In typical embodiments, a cable, a wire, a pipe or a line runs at least partially inside of at least a section of the NDE inner shaft.

Typically, the NDE inner shaft comprises an opening. In some embodiments, the opening is oriented in a radial direction of the NDE inner shaft. A radial direction of the NDE inner shaft runs vertical to the direction of the rotation axis of the NDE inner shaft. Typically, the opening is oriented approximately in a radial direction of the NDE inner shaft. Typically, the NDE inner shaft comprises a plurality of openings, wherein the openings may be located on one circumferential circle of the NDE inner shaft or on different circumferential circles of the NDE inner shaft.

Typically, the opening is located within a section of the NDE inner shaft comprising a hollow cross section. The opening may run through the whole cross section of the NDE inner shaft. In other words, the opening may create a connection between an inner surface of the NDE inner shaft and an outer surface of the NDE inner shaft.

Typically, the opening is a bore. In some embodiments, the cross section of the opening is of round form or of elliptical form. Typically, the cross section of the opening is of the shape of a polygon. In typical embodiments, the opening is manufactured by drilling through the cross section of the NDE inner shaft. Typically, the opening is manufactured during the casting or machining process of the NDE inner shaft.

The opening enables the running of a component from the inside of the NDE inner shaft to the outside of the NDE inner shaft. Typically, a cable, a wire, a line or a pipe is run through the hollow cross section of the NDE inner shaft and run through the opening of the NDE inner shaft to reach the outside of the NDE inner shaft. Such a routing of a cable may be used to run an electric wire or cable to the inner rotor. In the case of an externally excited rotor the electric wire can provide electric power to the inner rotor.

Typically, the NDE outer shaft comprises an opening. In some embodiments, the opening is oriented in a radial direction of the NDE outer shaft. A radial direction of the NDE outer shaft runs vertical to the direction of the rotation axis of the NDE outer shaft. Typically, the opening is oriented approximately in a radial direction of the NDE outer shaft. Typically, the NDE outer shaft comprises a plurality of openings, wherein the openings may be located on one circumferential circle of the NDE outer shaft or on different circumferential circles of the NDE outer shaft.

In typical embodiments, the proximal inner flange or the proximal outer flange comprise at least one axial opening. There might be more than one opening in some embodiments, e.g. for cable route and/or maintenance access. The opening runs through the respective flange in exactly or nearly the orientation of the rotation axis. Typically, the axial opening is located closer to the rotation axis than the outer rotor connection or the inner rotor connection respectively.

The at least one axial opening may be applied to run a cable or wire from one side of the respective flange to the other side of the respective flange. In some embodiments, such a cable may provide electrical power to the electric motor.

In some embodiments, the NDE outer shaft is supported by an NDE outer bearing. In some embodiments, the NDE inner shaft is supported by an NDE inner bearing. The NDE outer bearing and the NDE inner bearing may support the respective shaft in axial or radial direction. Typically, the NDE outer bearing is in contact with the distal outer flange. Typically, the NDE inner bearing is in contact with the distal inner flange. In typical embodiments the distal outer flange or the distal inner flange are part of a respective thrust bearing supporting the respective shaft in axial direction.

Typically, the distal outer flange is located on the proximal end of the distal outer segment. In some embodiments, the distal outer segment comprises a section proximal to the distal outer flange. Typically, the distal inner flange is located on the proximal end of the distal inner segment. In some embodiments, the distal inner segment comprises a section proximal to the distal inner flange.

In typical embodiments, the section of the NDE inner shaft on the proximal side of the distal inner flange has a smaller outer diameter than the distal inner flange. This section is typically located on the proximal inner segment. In typical embodiments, the section of the NDE outer shaft on the proximal side of the distal outer flange has a smaller outer diameter than the distal outer flange. This section is typically located on the proximal outer segment.

This profile of the NDE inner shaft and NDE outer shaft respectively may enable the sufficient design of the NDE inner bearing and NDE outer bearing respectively. Due to the elevation of the respective outer flange the respective bearing unit may contact the flange from both sides regarding the direction of the rotation axis. This may enable the support of the respective shaft in direction of the rotation axis.

In typical embodiments, at least a section of the NDE outer shaft is, regarding the direction of the rotation axis, located in between the distal inner flange and the proximal inner flange. In typical embodiments, the whole NDE outer shaft is, regarding the direction of the rotation axis, located in between the distal inner flange and the proximal inner flange.

In typical embodiments, the smallest inner diameter of the section of NDE outer shaft in between the distal inner flange and the proximal inner flange is smaller than the outer diameter of the distal inner flange. Typically, the smallest inner diameter of the section of NDE outer shaft in between the distal inner flange and the proximal inner flange is smaller than the outer diameter of the proximal inner flange.

Typically, due to the design of the NDE inner shaft the mounting of the NDE inner shaft is enabled. Typically, when the coupling between the distal inner segment and the proximal inner segment is open, the NDE inner shaft can be mounted into position.

In typical embodiments, an integral ring shaped component is mounted onto the outer surface of the NDE outer shaft. Typically, the integral ring shaped component is located in between the proximal outer flange and the distal outer flange. In some embodiments, the NDE outer shaft comprises a waisted outer surface located in between the proximal outer flange and the distal outer flange, wherein the diameter of the waisted outer surface is smaller than the diameter of the proximal outer flange and the distal outer flange. Typically, the integral ring shaped component is mounted onto the waisted outer surface. In typical embodiments, the integral ring shaped component comprises a inner diameter, wherein the inner diameter is smaller than the diameter of the proximal outer flange and the distal outer flange.

In typical embodiments, the integral ring shaped component is a slip ring unit. Typically, the slip ring unit is part of a system for the transfer of electrical power to the electric motor. Typically, the integral ring shaped component is a seal, for example a non-splitting oil seal. In typical embodiments the integral ring shaped component is a bearing, sensor ring or a washer. In typical embodiments, mounting of the ring shaped component is enabled, when the coupling between the distal outer segment and the proximal outer segment is open, even if the inner diameter is smaller than the diameter of the proximal outer flange and the distal outer flange.

In typical embodiments, an enclosed volume is defined in between the bearing housing, the NDE inner shaft and the NDE outer shaft. In some embodiments, the enclosed volume is sealed. Typically, the enclosed volume is sealed from the surrounding volume. In some embodiments, the sealing of the enclosed volume is realized with a distal seal, a proximal inner seal and a proximal outer seal.

Typically, the distal seal is located on the outer surface of NDE inner shaft. In some embodiments, the distal seal is located on the outer surface of the distal inner segment. The distal seal is placed in between the NDE inner shaft and the bearing housing. In typical embodiments, the proximal inner seal is located in between the NDE inner shaft and the NDE outer shaft. In some embodiments, the proximal inner seal is located in between the proximal outer segment and the proximal inner segment. In typical embodiments, the proximal outer seal is located on the outer surface of NDE outer shaft. In some embodiments, the proximal outer seal is located on the outer surface of proximal outer segment. The proximal outer seal is placed in between the NDE outer shaft and the bearing housing.

Typically, the distal seal, the proximal inner seal or the proximal outer seal are a radial shaft seal. The distal seal, the proximal inner seal or the proximal outer seal may comprise more than one seal. Typically, the distal seal, the proximal inner seal or the proximal outer seal function in one direction or in both directions. Typically, the distal seal, the proximal inner seal or the proximal outer seal prevent a fluid from entering or exiting the enclosed volume.

In typical embodiments, the proximal inner seal comprises a seal housing and a seal liner. Typically, the seal housing is placed in contact with the NDE outer shaft and the seal liner is placed in contact with the NDE inner shaft. Typically, the seal housing is placed in contact with the NDE inner shaft and the seal liner is placed in contact with the NDE outer shaft.

In some embodiments, the proximal inner seal is accessible through a proximal service opening. Typically, the proximal service opening is a hatch. In typical embodiments, the proximal service opening is an opening in axial direction within the proximal outer flange. In typical embodiments, the proximal service opening is an opening in radial direction within the outer rotor. Due to the proximal service opening the mounting, maintenance or replacement of the proximal inner seal is typically enabled without the requirement of dismounting parts of the shafts.

In some embodiments, the proximal inner seal is accessible through a distal service opening. Typically, the distal service opening is a hatch. In typical embodiments, the distal service opening is an opening in radial direction within the NDE outer shaft. Due to the distal service opening the mounting, maintenance or replacement of the proximal inner seal is typically enabled without the requirement of dismounting parts of the shafts. For example, components of the proximal inner seal, like e.g. a lip of the proximal inner seal, may be slid axially to bring them into a service position, e.g. a position accessible through the opening or the hatch. Wear parts of the proximal inner seal, for example lips may be changed or a bonding tool may be used via the opening or the hatch. The hatch may have an openable cover or may be without any cover. There might be one or more hatches present.

Typically, a method for mounting an azimuthing propulsion unit comprises providing an NDE outer shaft. Further, an NDE inner shaft is provided, wherein the NDE inner shaft comprises a distal inner segment and a proximal inner segment. The method typically includes the insertion of at least one of the distal inner segment and the proximal inner segment into a hollow cross section of the NDE outer shaft. Typically, only the proximal inner segment is inserted into the hollow cross section of the NDE outer shaft. Typically, the proximal inner segment is inserted into the hollow cross section of the NDE outer shaft from a first direction and the distal inner segment is inserted into the hollow cross section of the NDE outer shaft from a second direction, wherein the second direction is opposite of the first direction. Afterward an inner shaft connection is closed and the distal inner segment and the proximal inner segment are coupled together.

This method enables the mounting of the NDE inner shaft even if the diameter of a distal inner flange and a diameter of the proximal inner flange are wider than the inner diameter of a section of NDE outer shaft located in between the distal inner flange and the diameter of the proximal inner flange.

Typically, the providing of the NDE outer shaft of the method for mounting the azimuthing propulsion unit comprises providing a proximal outer segment and a distal outer segment. The proximal outer segment and the distal outer segment are coupled together by closing an outer shaft connection.

Typically, the method comprises mounting an integral ring shaped component onto an waisted outer surface of the NDE outer shaft. This is typically done before the proximal outer segment and the distal outer segment are coupled together.

With typical embodiments, the integral ring shaped component can be mounted onto the waisted outer surface of the NDE outer shaft, even if an inner diameter of the integral ring shaped component is smaller than the outer diameter of the distal outer flange and the proximal outer flange. Moreover, during maintenance typical embodiments enable the disassembly or renewal of parts mounted onto the shafts without the total disassembly of the respective shaft.

Typically, the method for mounting the azimuthing propulsion unit further comprises the closing of an outer rotor connection and the closing of an inner rotor connection.

### BRIEF DESCRIPTION OF THE DRAWINGS

The accompanying drawings relate to embodiments of the disclosure and are described in the following:
- FIG 1a: schematically illustrates an azimuthing propulsion unit according to the embodiments described herein;
- FIG 1b: schematically illustrates an azimuthing propulsion unit according to the embodiments described herein;
- FIG 1c: schematically illustrates an azimuthing propulsion unit according to the embodiments described herein
- FIG 2: schematically illustrates an embodiment of the invention in sectional view;
- FIG 3: schematically illustrates a different embodiment of the invention in sectional view;
- FIG 4: schematically illustrates a different embodiment of the invention in sectional view;
- FIG 5: schematically illustrates a different embodiment of the invention in sectional view;
- FIG 6: schematically illustrates a method for the assembly of the azimuthing propulsion unit;
- FIG 7: schematically illustrates a first modification of the method for the assembly of the azimuthing propulsion unit;
- FIG 8: schematically illustrates a second modification of the method for the assembly of the azimuthing propulsion unit.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations. In the figures, elements may be depicted with exaggerated dimensions to improve the comprehensibility of the detailed description of embodiments. In particular, relations of lengths and widths of components shown may be distorted. Further, some elements may be depicted with enlarged dimensions while other elements in the same figure are depicted, relatively, with reduced dimensions. Within this document the wording "or" refers to "and/or".

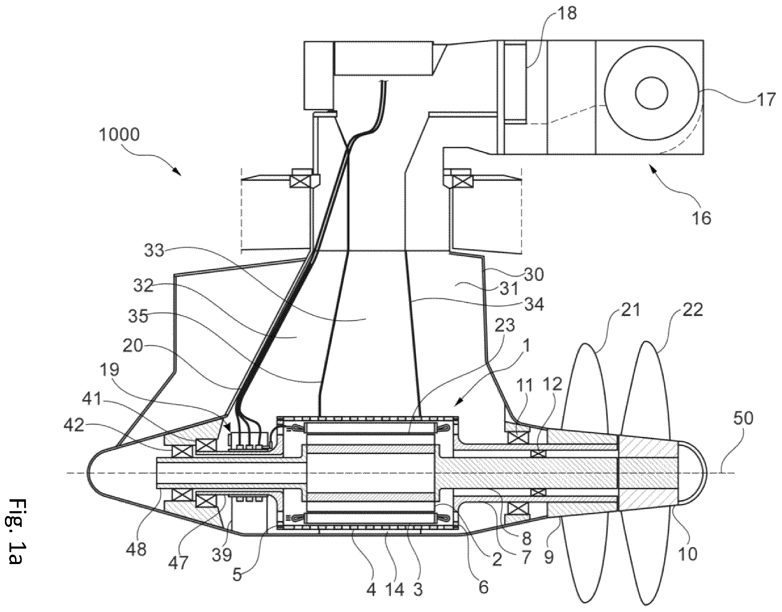

FIG 1a schematically illustrates an azimuthing propulsion unit 1000 according to typical embodiments described herein. The azimuthing propulsion unit 1000 of Fig. 1a comprises a dual rotor electric motor 1. The dual rotor electric motor 1 may also be described as contra rotating electric motor. The dual rotor electric motor 1 is typically arranged substantially horizontally centrally within the azimuthing propulsion unit 1000.Particularly, the dual rotor electric motor 1 is arranged within a pod 30 of the azimuthing propulsion unit 1000.

The dual rotor electric motor 1 comprises an inner rotor 2 and an outer rotor 3. The inner rotor 2 is arranged within the outer rotor 3. Inner rotor 2 and outer rotor 3 are arranged coaxially with respect to each other. The inner rotor 2 and the outer rotor 3 are configured to rotate about a rotation axis 50. The rotation axis 50 is a longitudinal axis of the azimuthing propulsion unit 1000. The inner rotor 2 drives an inner shaft propeller 10 and the outer rotor 3 drives an outer shaft propeller 9. The outer shaft propeller 9 and the inner shaft propeller 10 are arranged coaxially and rotate about the rotation axis 50. The outer shaft propeller 9 and the inner shaft propeller 10 form a contra rotating propeller unit. In the embodiment of Fig. 1a, the outer shaft propeller 9 and the inner shaft propeller 10 substantially have the same diameter. In embodiments not shown in Fig. 1a the outer shaft propeller 9 may have a diameter different from the diameter of the inner shaft propeller 10. Exemplarily, the outer shaft propeller 9 may have a diameter of at least 6 m, exemplarily of 6.1 m, and the inner shaft propeller 10 may have a diameter of at most 6 m, exemplarily of 5.575 m.

The outer rotor 3 of the dual rotor electric motor 1 typically comprises a perforated tube 4, as shown in the typical embodiment of Fig. 1a. The perforated tube 4 mechanically supports the outer rotor winding and comprises a plurality of openings. The plurality of openings of the perforated tube 4 are configured to pass air from an exterior of the dual rotor electric motor 1 into an interior of the dual rotor electric motor 1, and vice versa. Warm air, particularly heated by the dual rotor electric motor 1, may pass from an air gap 23 between the inner rotor 2 and the outer rotor 3 through the perforated tube to an annular air channel 14.

The perforated tube 4 transmits a torque of the outer rotor 3 to outer rotor end flanges 5, 6. A non-drive end, NDE, outer rotor end flange 5 connects the perforated tube 4 to an NDE outer shaft 47. A drive end, DE, outer rotor end flange 6 connects the perforated tube 4 to a DE outer shaft 7. The DE outer shaft 7 transmits the torque of the outer rotor 3 to the outer shaft propeller 9. The outer shaft propeller 9 comprises a plurality of first blades 21, of which two are visible in Fig. 1a. The inner rotor 2 is connected to an NDE inner shaft 48 and to a DE inner shaft 8. The DE inner 8 shaft transmits the torque of the inner rotor 2 to the inner shaft propeller 10. The inner shaft propeller 10 comprises a plurality of second blades 22, of which two are visible in Fig. 1a. In the embodiment of Fig. 1a, the outer shaft propeller 9 and the inner shaft propeller 10 are arranged in a pulling configuration. In particular, the first blades 21 and the second blades 22 are configured to operate in a pulling mode.

The NDE inner shaft 48 is supported in the pod 30 by an NDE inner bearing 42. The NDE outer shaft 47 is supported in the pod 30 by an NDE outer bearing 41. The NDE outer bearing 41 and the NDE inner bearing 42 typically comprise an oil seal, respectively. The DE outer shaft 7 is supported in the pod 30 by a DE outer bearing 11. The DE inner shaft 7 is supported in the DE outer shaft 8 by a DE inner bearing 12. The DE outer bearing 11 and the DE inner bearing 12 typically comprise an oil and water seal, respectively.

The dual rotor electric motor 1 is provided with electric energy via a slip ring unit 19. The slip ring unit 19 is typically arranged on the non-drive end side of the dual rotor electric motor 1 and particularly to contact the NDE outer shaft 47 as shown in Fig. 1a. The NDE outer shaft 47 and the NDE outer rotor end flange 5 are configured to electrically connect the slip ring unit 19 to the dual rotor electric motor 1. The slip ring unit 19 comprises at least one sliding contact to transmit electricity from power supply cables 20 to the dual rotor electric motor 1 and particularly to the outer rotor 3 of the dual rotor electric motor 1. From the outer rotor 3, electricity is provided to windings of the dual rotor electric motor 1. The power supply cables 20 provide electrical power from a marine vessel, and particular from a power supply of the marine vessel to the dual rotor electric motor 1 via the slip ring unit 19. The slip ring unit 19 comprises a slip ring unit housing 39. The slip ring unit housing 39 separates the slip ring unit 19 from a further interior of the pod 30 and particularly is configured to prevent dust generated inside the slip ring unit 19, particularly generated by the at least one sliding contact of the slip ring unit 19, to escape to the interior of the pod 30.

Inside the pod 30 of the azimuthing propulsion unit 1000, air is circulated. The azimuthing propulsion unit 1000 comprises a cooling air unit 16. In the embodiment of Fig. 1a, the cooling air unit 16 is arranged within a hull of a marine vessel. In the typical embodiment shown in Fig. 1a, the cooling air unit 16 comprises an air fan 17 to circulate air. The cooling air unit 16 typically comprises a heat exchanger 18. By the heat exchanger 18, warm air entering the heat exchanger 18 from the pod 30 is cooled with heat being at least partially transferred to a cooling agent of the heat exchanger 18. The cooling air unit 16 provides cool air to the dual rotor electric motor 1 via a DE ingoing air channel 31 and an NDE ingoing air channel 32 in the pod 30. The DE ingoing air channel 31 is physically separated from an outgoing air channel 33 by an DE air channel separating wall 34 in Fig. 1a. The NDE ingoing air channel 32 is physically separated from the outgoing air channel 33 by an NDE air channel separating wall 35 in Fig. 1a. Typically, the outgoing air channel 33 substantially extends in the center of the pod 30 and particularly along a vertical central axis of the pod 30. Air passing through the DE ingoing air channel 31 and/or the NDE ingoing air channel 32 passes through openings of the perforated tube 4 and/or the outer rotor end flanges 5, 6 into an interior of the dual rotor electric motor 1. Within the dual rotor electric motor 1, the air may be heated by the dual rotor electric motor 1, in particular when in operation. The air may exit the dual rotor electric motor 1 via openings of the perforated tube 4 towards the annular air channel 14. The annular air channel 14 is connected to the outgoing air channel 33.

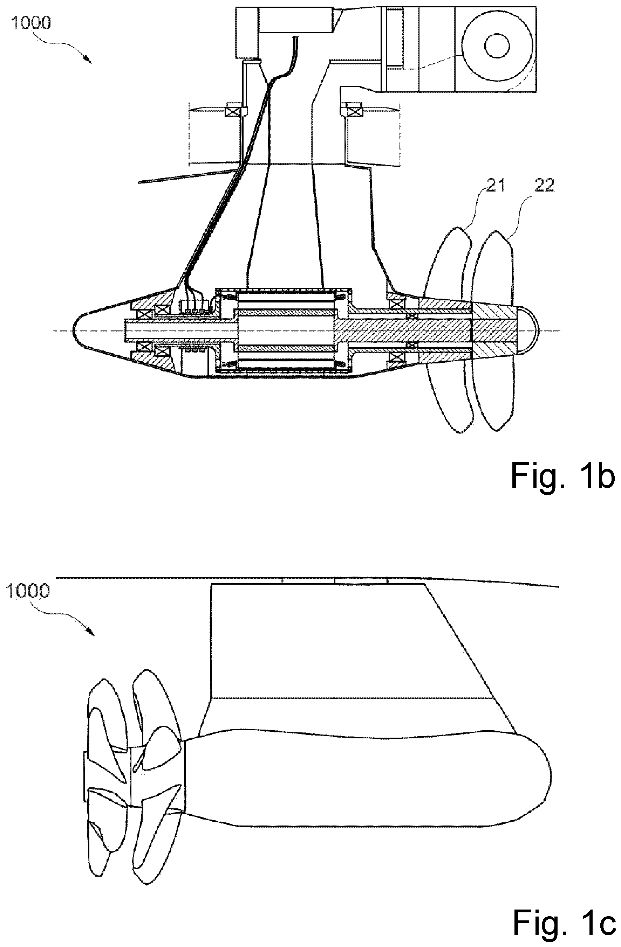

In Fig. 1b, the azimuthing propulsion unit 1000 is configured to operate in a pushing mode. In particular, the first blades 21 and the second blades 22 are configured to operate in a pushing mode. In Fig. 1c, a side view of the azimuthing propulsion unit 1000 of the embodiment of Fig. 1b is schematically shown.

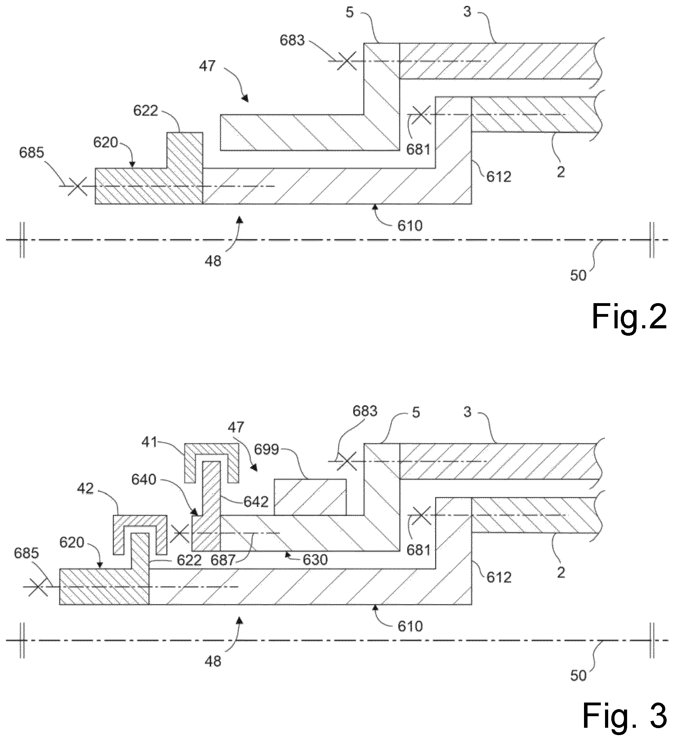

FIG 2 schematically illustrates a sectional view of an exemplary embodiment of an NDE of an azimuthing propulsion unit 1000, for example an azimuthing propulsion unit 1000 at least mostly similar to the azimuthing propulsion unit 1000 as shown in Fig, 1. The azimuthing propulsion unit 1000 comprises an inner rotor 2 and an outer rotor 3 of an electric motor.

The inner rotor 2 and the outer rotor 3 are arranged coaxial and rotate along a rotation axis 50. An NDE outer shaft 47 and an NDE inner shaft 48 are arranged coaxial. Both the NDE outer shaft 47 and the NDE inner shaft 48 rotate along the rotation axis 50.

The NDE inner shaft 48 comprises a distal inner segment 620 and a proximal inner segment 610. The distal inner segment 620 and the proximal inner segment 610 are coupled together by an inner shaft connection 685.

The distal inner segment 620 comprises a distal inner flange 622. The proximal inner segment 610 comprises a proximal inner flange 612. NDE outer shaft 47 comprises an NDE outer rotor end flange 5.

The distal inner segment 620 or the proximal inner segment 610 may be solely formed by a respective flange. The distal outer segment 640 or the proximal outer segment 630 may be solely formed by a respective flange. In other words, the respective segment may not comprise a change of the outer diameter. The respective flange is therefore dismountable from the rest of the respective shaft.

The outer rotor 3 is coupled to the NDE outer rotor end flange 5 with an outer rotor connection 683. The inner rotor is coupled to proximal inner flange 612 with an inner rotor connection 681.

Typical embodiments enable the coupling of the NDE outer shaft to the outer rotor before the inner shaft connection is closed. These typical embodiments may enable the mounting of the shafts in tight spaces.

FIG 3 schematically illustrates a sectional view of an embodiment of an NDE of an azimuthing propulsion unit 1000. The azimuthing propulsion unit 1000 comprises an inner rotor 2 and an outer rotor 3 of an electric motor. The inner rotor 2 and the outer rotor 3 are arranged coaxial and rotate along a rotation axis 50. AN NDE outer shaft 47 and an NDE inner shaft 48 are arranged coaxial. Both the NDE outer shaft 47 and the NDE inner shaft 48 rotate around the rotation axis 50.

The NDE inner shaft 48 comprises a distal inner segment 620 and a proximal inner segment 610. The distal inner segment 620 and the proximal inner segment 610 are coupled together by an inner shaft connection 685.

The NDE outer shaft 47 comprises a distal outer segment 640 and a proximal outer segment 630. The distal outer segment 640 and the proximal outer segment 630 are coupled together by an outer shaft connection 687.

The distal inner segment 620 comprises a distal inner flange 622. The proximal inner segment 610 comprises a proximal inner flange 612.

The proximal outer segment 630 comprises an NDE outer rotor end flange 5. The distal outer segment 640 comprises a distal outer flange 642.

Typical embodiments enable the mounting of the NDE inner shaft within the NDE outer shaft, even if the design of the whole shafts would not be mountable due to spatial restrictions. Further the split design of some embodiments enables the installation of the shafts within the pod due to the reduced requirements for space for the insertion of the shafts into the pod. During maintenance or in the case of a damage typical embodiments enable the replacement of just segments of the shafts instead of the whole shafts.

The outer rotor 3 is coupled to the NDE outer rotor end flange 5 with an outer rotor connection 683. The inner rotor is coupled to proximal inner flange 612 with an inner rotor connection 681.

Due to the split design of the respective rotor and the respective shaft, typical embodiments enable the replacement of one of the components without the need to replace the other one too.

The distal inner flange 622 is in contact with an NDE inner bearing 42. The distal outer flange 642 is in contact with an NDE outer bearing 41.

An integral ring shaped component 699 is mounted on the NDE outer shaft 47. The integral ring shaped component 699 is mounted in between the outer rotor end flange 5 and the distal outer flange 642.

The design of some embodiments enables the non-destructive mounting and dismounting of the integral ring shaped component. Especially in the case of integral ring shaped components, which are not or only with great effort dismountable, this enables an efficient mounting or replacement process. In the case of seals, the mounting of the seal without the need to split the seal is typically enabled.

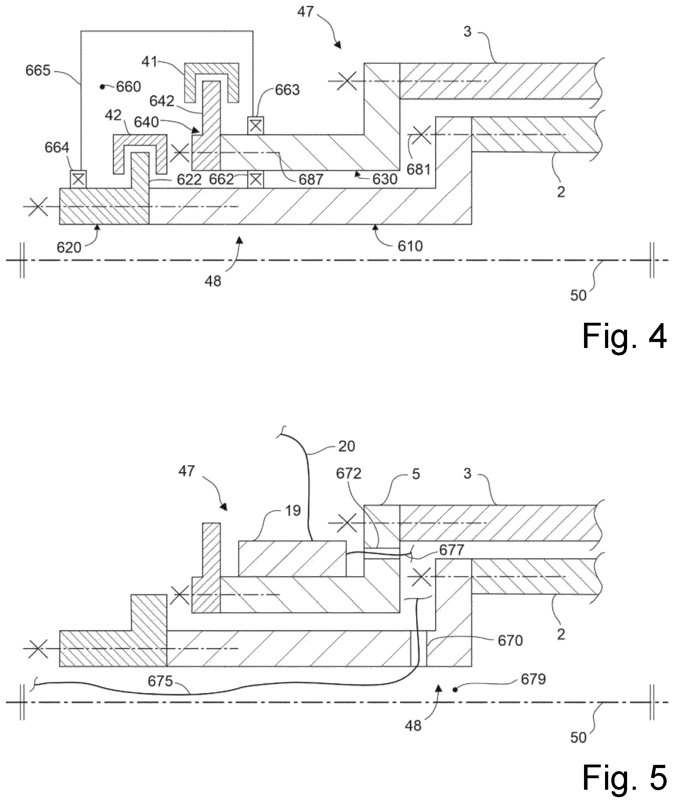

FIG 4 schematically illustrates a sectional view of an embodiment of an NDE of an azimuthing propulsion unit 1000. The azimuthing propulsion unit 1000 comprises an inner rotor 2 and an outer rotor 3 of an electric motor. The inner rotor 2 and the outer rotor 3 are arranged coaxial and rotate along a rotation axis 50. An NDE outer shaft 47 and an NDE inner shaft 48 are arranged coaxial. Both the NDE outer shaft 47 and the NDE inner shaft 48 rotate around the rotation axis 50.

The NDE inner shaft 48 comprises a distal inner segment 620 and a proximal inner segment 610. The NDE outer shaft 47 comprises a distal outer segment 640 and a proximal outer segment 630.

The distal inner flange 622 is in contact with a NDE inner bearing 42. The distal outer flange 642 is in contact with a NDE outer bearing 41. The NDE outer bearing 41 and the NDE inner bearing 42 are surrounded by a bearing housing 665.

An enclosed volume 660 is defined in between the bearing housing 665, the NDE inner shaft 48 and the NDE outer shaft 47.

The enclosed volume 660 is sealed by a proximal inner seal 662, a proximal outer seal 663 and a distal seal 664. The proximal inner seal 662 is located in between the NDE outer shaft 47 and the NDE inner shaft 48. The proximal outer seal 663 is located in between the NDE outer shaft 47 and the bearing housing 665. The distal seal 664 is located in between the NDE inner shaft 48 and the bearing housing 665. Typically, the proximal inner seal 662 is mounted onto the outer surface of the proximal inner segment 610. The proximal inner seal 662 typically comprises multiple components such as a seal liner or a seal housing. In some embodiments, one component of the proximal inner seal 662 is mounted onto the outer surface of the proximal inner segment 610. The proximal outer seal 663 is mounted onto the outer surface of the proximal outer segment 630. The distal seal 664 is mounted onto the outer surface of the distal inner segment 620. In some embodiments, the distal seal 664 may be fastened to the distal inner segment 620, or any protrusion of it, e.g. a protrusion integrated with the distal inner segment 620 or any detachable part protruding from the distal inner segment 620.

Due to typical embodiments the of the NDE inner shaft the mounting of the proximal inner seal is enabled through the opened inner shaft connection. Due to typical embodiments the of the NDE outer shaft the mounting of the proximal outer seal is enabled through the opened outer shaft connection.

FIG 5 schematically illustrates a sectional view of an embodiment of an NDE of an azimuthing propulsion unit 1000. The azimuthing propulsion unit 1000 comprises an inner rotor 2 and an outer rotor 3 of an electric motor. The inner rotor 2 and the outer rotor 3 are arranged coaxial and rotate along the rotation axis 50. An NDE outer shaft 47 and an NDE inner shaft 48 are arranged coaxial. Both the NDE outer shaft 47 and the NDE inner shaft 48 rotate around the rotation axis 50.

The NDE inner shaft 48 comprises an opening 670 and a hollow cross section 679. The opening is oriented in radial direction of the NDE inner shaft 48. A first cable 675 runs through the hollow cross section 679 and the opening 670.

Typical embodiments enable the placement of the first cable on a small diameter around the rotation axis and therefore in a section with comparably reduced forces due to the rotational speed of the shaft.

On to the NDE outer shaft 47 a slip ring unit 19 is mounted. A power supply cable 20 runs to the slip ring unit 19. The NDE outer shaft 47 comprises an NDE outer rotor end flange 5. The NDE outer rotor end flange 5 comprises an axial opening 672. The axial opening 672 is oriented in direction of the rotation axis 50. A second cable 677 runs from the slip ring unit 19 and through the axial opening 672.

In typical embodiments the wiring of the inner rotor or the outer rotor is enabled. Depended upon the type of electric motor applied, this may be required for the operation of the electric motor. The wiring of typical embodiments enables the running of the cables without the need of increasing the overall diameter of the electric motor.

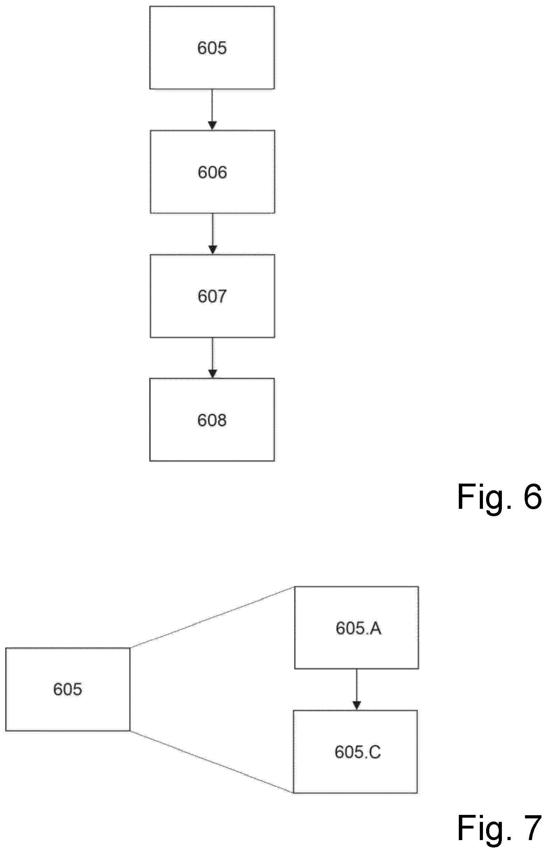

Fig. 6 schematically illustrates a method for the assembly of an azimuthing propulsion unit. The method for mounting the azimuthing propulsion unit comprises providing an NDE outer shaft 605. Further, an NDE inner shaft is provided 606, wherein the NDE inner shaft comprises a distal inner segment and a proximal inner segment. The method includes the insertion of at least one of the distal inner segment and the proximal inner segment into a hollow cross section of the NDE outer shaft 607. Afterward an inner shaft connection is closed and the distal inner segment and the proximal inner segment are coupled together 608.

Fig. 7 schematically illustrates a variation of a providing of an NDE outer shaft 605 for a method for the assembly of an azimuthing propulsion unit. First a distal outer segment and a proximal outer segment are provided 605.A. Afterwards, an outer shaft connection is closed and the distal outer segment and the proximal outer segment are coupled together 605.C.

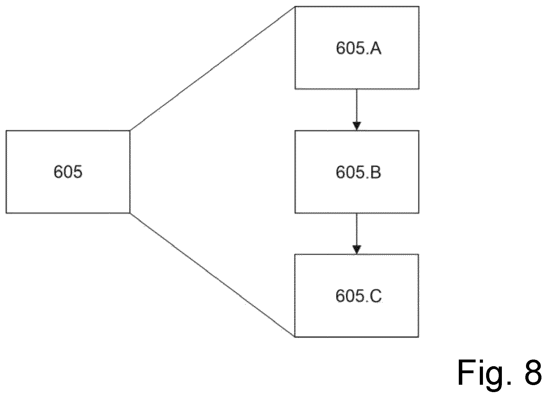

Fig. 8 schematically illustrates a variation of a providing of an NDE outer shaft 605 for a method for the assembly of an azimuthing propulsion unit. First a distal outer segment and a proximal outer segment are provided 605.A. An integral ring shaped component is mounted onto the outer shaft 605.B. Finally, an outer shaft connection is closed and the distal outer segment and the proximal outer segment are coupled together 605.C.

## Claims

1. An azimuthing propulsion unit (1000) comprising a dual rotor electric motor (1), the dual rotor electric motor (1) comprising an outer rotor (3) and an inner rotor (2) arranged coaxially within the outer rotor (3); the azimuthing propulsion unit (1000) further comprising:
- a rotatable inner shaft (48) coupled to the inner rotor (2); and
- a rotatable outer shaft (47) coupled to the outer rotor (3), wherein the inner shaft (48) runs at least partially within the outer shaft (47);
- and wherein the inner shaft (48) comprises a distal inner segment (620) and a proximal inner segment (610).

2. An azimuthing propulsion unit (1000) according to claim 1, wherein the outer shaft (47) comprises a distal outer segment (640) and a proximal outer segment (630).

3. An azimuthing propulsion unit (1000) according to any preceding claim, wherein at least one of the inner shaft (48) and outer shaft (47) comprises a dismountable flange, wherein the dismountable flange forms a segment of the respective shaft.

4. An azimuthing propulsion unit (1000) according to any preceding claim, wherein the distal inner segment (620) and the proximal inner segment (610) are releasably joint together.

5. An azimuthing propulsion unit (1000) according to any preceding claim, wherein the proximal inner segment (610) comprises a proximal inner flange (612).

6. An azimuthing propulsion unit (1000) according to any preceding claim, wherein the distal inner segment (620) comprises a distal inner flange (622).

7. An azimuthing propulsion unit (1000) according to claim 2-6, wherein
the proximal outer segment (630) comprises a proximal outer flange (5); and
the distal outer segment (640) comprises a distal outer flange (642).

8. An azimuthing propulsion unit (1000) according to claim 7, wherein
the proximal outer flange (5) is coupled to the outer rotor (3); and
the proximal inner flange (612) is coupled to the inner rotor (2).

9. An azimuthing propulsion unit (1000) according to any preceding claim, wherein the inner shaft (48) comprises a section with a hollow cross section (679).

10. An azimuthing propulsion unit (1000) according to any preceding claim, wherein at least one integral ring shaped component (699) is mounted onto a surface of the outer shaft and is located in between the proximal outer flange (5) and the distal outer flange (642).

11. An azimuthing propulsion unit (1000) according to any preceding claim, comprising an enclosed volume (660), which is defined as the volume in between the inner shaft (48) and the outer shaft (47) and a bearing housing (665); and wherein the enclosed volume (660) is sealed.

12. A method for mounting an azimuthing propulsion unit (1000), preferably an azimuthing propulsion unit (1000) according to any of the claims 1 - 11, comprising:
providing an outer shaft (47) with a hollow cross section; and
providing an inner shaft (48); wherein the inner shaft (48) comprises a distal inner segment (620) and a proximal inner segment (610), wherein the method further comprises:
- inserting at least one of or both of the distal inner segment (620) and the proximal inner segment (610) into the outer shaft (47); and
- coupling the distal inner segment (620) to the proximal inner segment (610).

13. A method according to claim 12, wherein providing the outer shaft (47) comprises providing a distal outer segment (640) and a proximal outer segment (630); and wherein the method further comprises:
- coupling the distal outer segment (640) to the proximal outer segment (630) to form the outer shaft (47), before coupling the distal inner segment (620) to the proximal inner segment (610).

14. A method according to claim 13, wherein the method further comprises:
- mounting an integral ring shaped component (699) onto the outer shaft (47), before coupling the distal outer segment (640) to the proximal outer segment (630).

15. A method according to any of the claims 13 - 14 further comprising:
- coupling the proximal inner segment (610) to an inner rotor (2) of a dual rotor electric motor (1) using an inner rotor connection (681); and
- coupling the proximal outer segment (630) to an outer rotor (3) of the dual rotor electric motor (1) using an outer rotor connection (683).
